# EUROPÄISCHE PATENTSCHRIFT

(11) **EP 1 840 010 B1**
(45) Veröffentlichungstag und Bekanntmachung des Hinweises auf die Patenterteilung: **22.10.2008**
(21) Anmeldenummer: 07000650.7
(22) Anmeldetag: 13.01.2007
(51) Int. Cl.: B62D 29/00

(54) **Tragstruktur für ein Kraftfahrzeug**
Support frame for a motor vehicle
Structure portante pour un véhicule automobile

(30) Priorität: 31.03.2006 DE 102006014979
(43) Veröffentlichungstag der Anmeldung: 03.10.2007
(73) Patentinhaber: Dr. Ing. h.c. F. Porsche Aktiengesellschaft, 70435 Stuttgart (DE)
(72) Erfinder: Schiebel, Dieter, 70825 Korntal-Münchigen (DE); Lippold, Andrea, 70499 Stuttgart (DE)

(56) Entgegenhaltungen:
- EP-A- 1 693 284
- EP-A1- 1 508 512
- EP-A2- 0 146 716
- DE-A1- 10 236 982
- DE-A1- 19 808 392

## Beschreibung

Bei der Erfindung wird ausgegangen von einer Tragstruktur für ein Kraftfahrzeug, gemäß Oberbegriff des Patentanspruchs 1.

Eine solche Tragstruktur für ein Kraftfahrzeug ist in der DE 33 46 986 A1 beschrieben. Die Tragstruktur besitzt ein aus Leichtmetall gegossenes Längstragelement, das im Vorderwagen eingesetzt ist. Es ist als nach oben offenes Profil, also U-förmig ausgeführt und wird von einem als Schließblech bezeichneten Schließelement verschlossen. Jeweils endseitig weist das Längstragelement einen Verbindungsabschnitt auf, von denen ein erster Verbindungsabschnitt der Befestigung eines vorderen Längsträgers und ein zweiter Verbindungsabschnitt der Befestigung eines Schwellers dient. Auf den ersten Verbindungsabschnitt wird der als Hohlprofil ausgeführte vordere Längsträger aufgesteckt. Der Schweller wird von dem zweiten Verbindungsabschnitt aufgenommen. Eine ähnlich ausgestaltetes Längstragelement ist im Bereich des Hinterwagens in die Tragstruktur eingesetzt. Dieses ist jedoch ohne Schließelement ausgeführt, weist jedoch den ersten und zweiten Verbindungsabschnitt auf. Auf den ersten Verbindungsabschnitt wird der hintere Längsträger aufgesteckt. Der Schweller wird an den zweiten Verbindungsabschnitt des Längstragelements seitlich herangeführt.

Aufgabe der Erfindung ist es, eine Tragstruktur der eingangs genannten Art anzugeben, die einfach aufgebaut und hinsichtlich Steifigkeit optimiert ist.

Gelöst wird diese Aufgabe mit einer Tragstruktur für ein Kraftfahrzeug, die die in Anspruch 1 genannten Merkmale aufweist. Ausgestaltungen der Erfindung sind in den Unteransprüchen angegeben.

Die mit der Erfindung hauptsächlich erzielten Vorteile sind darin zu sehen, dass der erfindungsgemäß ausgebildete zweite Verbindungsabschnitt einerseits für die Anbindung des seitlichen Schwellers dient und andererseits - für optimierten Seitenaufprallschutz und Steifigkeit - einen Quertragabschnitt bildet, der durch das Profil mit dem Schließelement realisiert ist hinsichtlich Steifigkeit und Seitenaufprallschutz. Ferner dient der zweite Verbindungsabschnitt neben der Anbindung des Schwellers auch als Befestigung für einen von dem Schweller weggerichtet verlaufenden Querträger. Durch die Ausgestaltung des offenen Profils mit dem Schließelement ist der Quertragabschnitt in Fahrzeugquerrichtung als, vorzugsweise geschlossenes, Hohlprofil, also trägerartig ausgebildet, und stellt so eine Tragverbindung zwischen dem Schweller und dem an dem Quertragabschnitt befestigten Querträger dar.

In besonders bevorzugter Ausführungsform wird nach Anspruch 2 der Quertragabschnitt dadurch gebildet, dass sich das offene Profil des Längstragelements erweitert, so dass ein entsprechender Abstand zwischen dem außen liegenden Schweller und dem davon weggerichtet verlaufenden Querträger überbrückt werden kann. Geschlossen wird das offene Profil in besonders bevorzugter Ausführungsform durch das Schließelement, welches neben einem Deckel für das offene Profil außerdem eine aufrechte, quer zur Längserstreckung des Profils verlaufende Schließwand besitzt. In Längserstreckungsrichtung des Längstragelements bildet somit die Schließwand den Abschluss des offenen Profils. Außerdem wird durch den Deckel, die Schließwand und das offene Profil auf einfache Art und Weise ein geschlossenes Hohlprofil gebildet. Eine Weiterbildung dazu ist in Anspruch 3 angegeben.

Besonders bevorzugt wird nach Anspruch 4 ein Schließelement verwendet, welches im Querschnitt U-förmig ausgebildet ist und somit zwei aufrechte, quer zur Längserstreckung des Profils verlaufende Schließwände besitzt, die über den Deckel miteinander verbunden sind. Dadurch wird die Steifigkeit des Quertragabschnitts weiter verbessert. Eine darüber hinausgehende Steifigkeitserhöhung wird mit den Merkmalen des Anspruchs 5 und/oder 6 erreicht.

Ein einfaches Zusammensetzen der Tragstruktur ist mit den Merkmalen des Anspruchs 7 möglich, wonach der vom Schweller weggerichtet verlaufende Querträger auf den Quertragabschnitt aufgesetzt und dort befestigt ist.

Bei entsprechender Orientierung des Hohlprofils des Längstragelements wird das Schließelement - wie vorstehend beschrieben - einen Deckel des offenen Profils bilden. Demnach ist es gemäß Anspruch 8 vorteilhaft, wenn der Querträger auf das Schließelement, insbesondere dessen Deckel, aufgesetzt und damit verbunden ist.

Insbesondere bei Fahrzeugen, die einen Mitteltunnel aufweisen, ist es vorteilhaft, wenn der Querträger als Bogen ausgeführt ist und somit den Mitteltunnel überspannt. Insbesondere der als Bogen ausgeführte Querträger lässt sich als Gussteil einfach herstellen, wie dies Anspruch 10 beschreibt.

Das Schließelement hingegen ist entsprechend Anspruch 11 als Form-Blechteil ausgeführt und kann geprägt, umgeformt und/oder tiefgezogen sein. Durch die besondere Wahl der Herstellverfahren für die einzelnen Elemente der Tragstruktur, also des gegossenen Längstragelements, des Schließelements als gebogenes Blechteil und des gegossenen Querträgers lässt sich die komplexe Tragstruktur einfach herstellen, wobei vorzugsweise sämtliche Teile der Tragstruktur aus einem Leichtmetall bzw. einer Leichtmetalllegierung hergestellt ist.

Schweller, die im Querschnitt gesehen profiliert sind, weisen hauptsächlich in ihrer Längserstreckungsrichtung eine entsprechende Steifigkeit aus. Um einen derartigen Schweller mit der erfindungsgemäßen Tragstruktur verbinden zu können, ist nach einer in Anspruch 13 angegebenen Ausführungsvariante vorgesehen, die Profilwand des offenen Profils im Bereich des zweiten Verbindungsabschnitts zu profilieren. Schweller und Profilwand passen so flächig aneinander.

In vorteilhafter Weise lässt sich das gegossene Längstragelement einfacher herstellen, wenn es durchgehend als offenes Profil ausgeführt ist. Außerdem bietet sich so die vorteilhafte Möglichkeit für eine günstige Befestigung des Längsträgers im Bereich des ersten Verbindungsabschnitts, beispielsweise durch Einlegen des Längsträgers in das offene Profil.

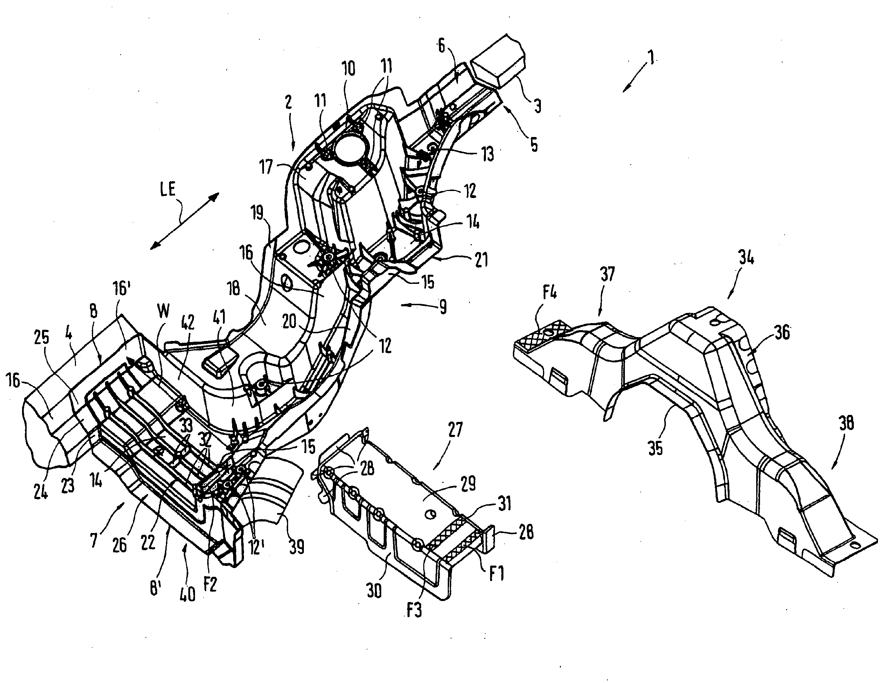

Die Erfindung wird nachfolgend anhand eines Ausführungsbeispiels mit Bezug auf die Zeichnung näher erläutert. Die einzige Figur zeigt in Explosionsdarstellung ausschnittweise eine Tragstruktur für ein Kraftfahrzeug.

Von einer Tragstruktur 1 für ein sonst nicht weiter dargestelltes Kraftfahrzeug ist ein beispielsweise im Leichtmetallguss hergestelltes, also gegossenes Längstragelement 2 zu sehen, welches - in Längsrichtung LE des Kraftfahrzeugs gesehen - zwischen einem heckseitigen Längsträger 3 und einem auch als Seitenträger bezeichneten Schweller 4 der Tragstruktur 1 angeordnet ist. Der Schweller 4 ist einer hier nicht dargestellten Bodengruppe der Tragstruktur 1 und der hintere Längsträger 3 der Tragstruktur 1 ist einem nicht weiter dargestellten Hinterwagen des Kraftfahrzeugs zugeordnet. Das Längstragelement 2 weist an seinem ersten Ende 5, welches hier ein hinteres Ende bildet, einen ersten Verbindungsabschnitt 6 für die Befestigung des hinteren Längsträgers 3 auf. An seinem zweiten Ende 7, welches hier ein vorderes Ende bildet, ist das Längstragelement 2 mit einem zweiten Verbindungsabschnitt 8 ausgestattet, der der Befestigung des Schwellers 4 dient. Benachbart zum vorderen Ende 7 ist ein Verbindungselement 8' vorgesehen, das flanschartig ausgeführt ist und die Verbindung zur Bodengruppe herstellt. Zwischen den beiden Verbindungsabschnitten 6 und 8 erstreckt sich ein Längstragabschnitt 9 des Längstragelements 2. Der Längstragabschnitt 9 weist eine Federbeinaufnahme 10 auf, die schalenartig ausgeführt ist und erste Anbindungsstellen 11 für ein hier nicht zu sehendes Federbein eines Fahrwerks aufweist. Ferner sind innerhalb des Längstragabschnitts 9 zweite Anbindungsstellen 12 für ein Fahrwerk, hier die Hinterachse, ausgebildet. Überdies kann der Längsträgerabschnitt 9 und/oder der zweite Verbindungsabschnitt 8 dritte Anbindungsstellen 12' für ein Getriebe umfassen.

Im Folgenden wird auf den Aufbau des Längstragelements 2 näher eingegangen: Es ist als, insbesondere nach oben, offenes Profil 13 ausgebildet, weist also im Querschnitt im wesentlichen eine U-Form auf, die einen Profilboden 14 und vom Profilboden 14 ausgehende, aufrechte Profilwände 15 und 16 umfasst. Das Profil 13 könnte alternativ unten oder seitlich offen, also hutförmig oder C-förmig ausgeführt sein. Die Profilwand 15 bildet hier eine innere Profilwand und die Profilwand 16 stellt eine äußere Profilwand dar, die außerdem in einer Wanderweiterung 17 die Federbeinaufnahme 10 aufweist. Zwischen dem zweiten Verbindungsabschnitt 8 und der Federbeinaufnahme 10 geht die äußere Profilwand 16 in einen von dem Profil 13 weggerichteten Wandabschnitt 18 über. Sowohl von der Wanderweiterung 17 als auch von dem Wandabschnitt 18 kragt noch ein Befestigungsflansch 19 etwa aufrecht ab, der der Befestigung eines hier nicht dargestellten inneren Radkastens dient. Der Flansch 19 kann sich bis zu dem vorderen Verbindungsabschnitt 8, insbesondere bis zu dem Schweller 4, und in entgegengesetzter Richtung bis in den ersten bzw. hinteren Verbindungsabschnitt 6 hinein erstrecken. Von der inneren Profilwand 15 geht ebenfalls ein Befestigungsflansch 20 aus, der nach innen, also in Richtung Fahrzeugmittellängsachse (nicht eingezeichnet) gerichtet ist. Dieser Befestigungsflansch 20 dient der Befestigung eines hier nicht dargestellten ein- oder mehrteiligen Schließbleches für das Profil 13, welches Schließblech sich von dem ersten Verbindungsabschnitt 6 über den Längstragabschnitt 9 bis an den zweiten Verbindungsabschnitt 8 heran erstrecken kann. In der inneren Profilwand 15 ist noch eine Befestigungsaufnahme 21 für eine hier nicht dargestellte Querstrebe der Tragstruktur 1 ausgebildet, welche Querstrebe sich bis zu einem hier nicht dargestellten Längstragelement erstreckt, welches der gegenüberliegenden Fahrzeugseite zugeordnet ist. Dieses nicht dargestellte Längstragelement ist demnach identisch, jedoch spiegelbildlich zum dargestellten Längstragelement 2 ausgeführt.

Das offene Profil 13 erstreckt sich bis in den zweiten Verbindungsabschnitt 8 hinein, so dass dieser als Fortsatz 22 des offenen Profils 13 zu sehen ist. Er weist daher sowohl den Profilboden 14 als auch die innere und äußere Profilwand 15 und 16 auf. An der äußeren Profilwand 16 des zweiten Verbindungsabschnitts 8 ist außenliegend der Schweller 4 befestigt. Dabei kann vorgesehen sein, dass die äußere Profilwand 16 profiliert ist, d.h. zumindest zwei Wandabschnitte, hier drei Wandabschnitte 23, 24, 25 aufweist, die einen Winkel zueinander einschließen, der ungleich 180° ist. Entsprechend profiliert ist der Schweller 4 ausgebildet, so dass dieser formschlüssig bzw. flächig an der äußeren Profilwand 16 und deren Wandabschnitten 23 bis 25 anliegen kann. Um von dem Schweller 4 weggerichtet einen Quertragabschnitt 26 der Tragstruktur 1 bilden zu können, der sich also von dem Schweller 4 in Richtung der vorstehend erwähnten Fahrzeugmittellängsachse erstreckt, wird in den Fortsatz 22 ein Schließelement 27 in das offene Profil 13 eingesetzt, so dass das offene Profil 13 verschlossen wird und ein geschlossenes Hohlprofil darstellt. Dieses Schließelement 27 erstreckt sich von der äußeren Profilwand 16 bis zur inneren Profilwand 15 und weist abgebogene Befestigungsstreifen 28 auf, die mit der inneren bzw. äußeren Profilwand 15, 16 verbunden werden können. Das Schließelement 27 kann das Profil 13 im Bereich des Fortsatzes 22 vollständig abdecken. Im gezeigten Ausführungsbeispiel weist das Schließelement 27 jedoch eine geringere Erstreckung in der Längsrichtung LE als der Fortsatz 22 auf. Um dennoch ein geschlossenes Hohlprofil für den Quertragabschnitt 26 realisieren zu können, besitzt das Schließelement außer einem Deckel 29 zumindest eine, vorzugsweise jedoch zwei aufrechte, quer zur Längsrichtung LE des Profils 13 verlaufende Schließwände 30 und 31 auf, die bis zu dem Profilboden 14 reichen. In bevorzugter Ausführungsform ist das Schließelement 27 also als ein auf dem Kopf stehendes U-Profil ausgeführt, welches zusammen mit dem Profilboden 14 das geschlossene Hohlprofil des Quertragabschnitts 26 bildet. Mit einer ersten Verbindungsfläche F1 wird das Schließelement 27, insbesondere dessen Deckel 29, mit einer zweiten Verbindungsfläche F2 am Fortsatz 22 verbunden. Die Verbindungsfläche F2 liegt zwischen der inneren Profilwand 15 und den Anbindungsstellen 12'. Um die Steifigkeit des Quertragabschnitts 26 zu erhöhen, können an dem Profilboden 13 ein oder mehrere Querverstärkungsstege 32 ausgebildet sein, die sich bis in die Profilwände 15 und/oder 16 hinein erstrecken können. Sofern mehrere Querverstärkungsstege 32 vorgesehen sind, weisen sie einen Abstand zueinander und verlaufen im wesentlichen parallel zueinander. Zwischen zwei Querverstärkungsstegen 32 können noch ein oder mehrere Längsverstärkungsstege 33 ausgebildet sein.

Für eine Querverbindung zu dem hier nicht dargestellten, vorstehend jedoch erwähnten spiegelbildlichen Längstragelement, wird an dem Quertragabschnitt 26 ein von dem Schweller 4 weggerichtet verlaufender Querträger 34 befestigt, der im wesentlichen bogenförmig zur Überbrückung eines an sich bekannten Mitteltunnels 35 ausgeführt ist und den Mitteltunnel 35 zumindest abschnittweise bildet. Von einem mittleren Bogenabschnitt 36 gehen seitlich nach außen gerichtete Befestigungsfüße 37 bzw. 38 aus, von denen der Befestigungsfuß 37 mit dem Quertragabschnitt 26 verbunden wird. Insbesondere wird der Befestigungsfuß 37 auf den Quertragabschnitt 26, vorzugsweise auf den Deckel 29 des Schließelements 27 aufgesetzt und damit verbunden. Dafür ist an dem Schließelement 27, insbesondere an dessen Deckel 29, eine dritte Verbindungsfläche F3 und an dem Befestigungsfuß 37 eine vierte Verbindungsfläche F4 vorgesehen. Im Querschnitt ist der Querträger 34 als nach unten offenes Profil, also - wie das Schließelement 27 - als auf dem Kopf stehendes U-Profil ausgeführt. Im Bereich des Befestigungsfußes 37 wird somit das nach unten offene Profil des Querträgers 34 durch den Deckel 29 verschlossen, so dass ein geschlossener Hohlträger entsteht. Um im Bereich des Mitteltunnels 35 das offene Profil des Querträgers 34 verschließen zu können, kann einstückig von der inneren Profilwand 15 ein bogenförmiger Fortsatz 39 ausgehen, der somit zumindest in einem Abschnitt ein Schließblech für das offene Profil des Querträgers 34 bildet. Dieses Schließblech könnte alternativ als separates Teil bereitgestellt werden. Der Querträger 34 ist wie das Längstragelement 2 als gegossenes Formteil, insbesondere aus einer Leichtmetalllegierung oder einem Leichtmetall, hergestellt. Das Schließelement 27 hingegen wird vorzugsweise als tiefgezogenes, umgeformtes, gebogenes bzw. geprägtes Form-Blechteil aus einem Leichtmetall bzw. einer Leichtmetalllegierung gefertigt.

Besonders bevorzugt wird ein Ausführungsbeispiel, bei dem der zweite Verbindungsabschnitt 8 durch einen Verbreiterungsabschnitt 40 des offenen Profils 13 gebildet wird. D.h., dass sich die Weite W des Profils 13 zwischen den Profilwänden 15 und 16 vergrößert. Dies ist bei dem Längstragelement 2 dadurch realisiert, dass die äußere Profilwand 16 nach dem Längstragabschnitt 9 des Längstragelements 2 über einen gebogenen Wandabschnitt 41 zunächst in eine Querwand 42 übergeht, die sich also quer zur Längsrichtung LE nach außen in Richtung Schweller 4 erstreckt, um dann in den in Längsrichtung LE verlaufenden Wandabschnitt 16' der äußeren Profilwand 16 im Bereich des zweiten Verbindungsabschnitts 8 überzugehen, während die innere Profilwand 15 im wesentlichen geradlinig bis in den Fortsatz 22 verläuft. Der Wandabschnitt 18 mit seinem davon ausgehenden Flansch 19 erstreckt sich bis zu dem Wandabschnitt 42 der äußeren Profilwand 16.

Wie aus vorstehender Beschreibung deutlich wird, ist das Längstragelement 2 durchgehend als offenes Profil 13 ausgeführt, welches sich also von dem ersten Verbindungsabschnitt 6 über den Längstragabschnitt 9 bis in den zweiten Verbindungsabschnitt 8 erstreckt. Dabei ist jedoch vorgesehen, dass der hintere Längsträger 3 zur Befestigung in das offene Profil 13 eingelegt und darin befestigt wird, während der Schweller 4 außen an dem Verbindungsabschnitt 8, insbesondere an dem Wandabschnitt 16', befestigt ist. Der Fortsatz 22, der zusammen mit dem Schließelement 27 den Quertragabschnitt 26 bildet, dient also einerseits der endseitigen Befestigung des Schwellers 4 als auch der Befestigung des Querträgers 34. Dabei kann der Quertragabschnitt 26 - ausgehend von der inneren Profilwand 15 - sich durch den Verbreiterungsabschnitt 40 nach außen in Richtung Schweller 4 erstrecken, so dass zwischen Schweller 4 und Profil 13 bzw. hinterer Längsträger 3 ein seitlicher Versatz gegeben ist. In Draufsicht gesehen könnte das Längstragelement 2 also T- oder L-förmig realisiert sein. Im Übrigen können die hier beschriebenen Teile 2, 3, 4, 27, 34 durch Kleben, Nieten, insbesondere Stanznieten, und/oder Schweißen miteinander verbunden sein.

## Patentansprüche

1. Tragstruktur (1) für ein Kraftfahrzeug, mit einem gegossenen Längstragelement (2), das zumindest abschnittweise als offenes Profil (13) ausgebildet ist und das außerdem jeweils endseitig einen ersten Verbindungsabschnitt (6) für die Befestigung eines Längsträgers (3) und einen zweiten Verbindungsabschnitt (8) für die Befestigung eines Schwellers (4) der Tragstruktur (1) aufweist, und mit einem das Profil (13) des Längstragelements (2) zumindest abschnittweise verschließenden Schließelement (27), **dadurch gekennzeichnet, dass** der zweite Verbindungsabschnitt (8) als Fortsatz (22) des offenen Profils (13) ausgeführt ist, dass der Fortsatz (22) zusammen mit dem Schließelement (27) einen Quertragabschnitt (26) bildet, der quer zur Längserstreckung (LE) des Längstragelements (2) ausgerichtet ist, und dass an dem Quertragabschnitt (26) sowohl der Schweller (4) als auch ein vom Schweller weggerichtet verlaufender Querträger (34) befestigt sind.

2. Tragstruktur nach Anspruch 1, **dadurch gekennzeichnet, dass** der hohle Quertragabschnitt (26) **dadurch** gebildet ist, dass sich das offene Profil (13) für den zweiten Verbindungsabschnitt (8) in einem Verbreiterungsabschnitt (40) erweitert und dass das Schließelement (27) außer einem Deckel (29) zumindest eine aufrechte, quer zur Längserstreckung (LE) des Profils (13) verlaufende Schließwand (30, 31) besitzt.

3. Tragstruktur nach Anspruch 1 oder 2, **dadurch gekennzeichnet, dass** das Schließelement (27) zwei aufrechten Profilwände (15, 16) des Profils (13) miteinander verbindet und mit seiner Schließwand (30, 31) bis zu einem Profilboden (14) des Profils (13) geführt ist.

4. Tragstruktur nach einem der vorhergehenden Ansprüche, **dadurch gekennzeichnet, dass** das Schließelement (27) im Querschnitt U-förmig ausgeführt ist und somit zwei Schließwände (30, 31) besitzt, die über den Deckel (29) miteinander verbunden sind.

5. Tragstruktur nach einem der vorhergehenden Ansprüche, **dadurch gekennzeichnet, dass** an dem Profilboden (14) des Profils (13) im zweiten Verbindungsabschnitt (8) zumindest ein Querverstärkungssteg (32) ausgebildet ist.

6. Tragstruktur nach einem der vorhergehenden Ansprüche, **dadurch gekennzeichnet, dass** sich der Querverstärkungssteg (32) bis in die Profilwände (15, 16) des Profils (13) im Bereich des zweiten Verbindungsabschnitts (8) erstreckt.

7. Tragstruktur nach einem der vorhergehenden Ansprüche, **dadurch gekennzeichnet, dass** der Querträger (34) auf den Quertragabschnitt (26) aufgesetzt ist.

8. Tragstruktur nach einem der vorhergehenden Ansprüche, **dadurch gekennzeichnet, dass** das Querträger (34) an dem Quertragabschnitt (26) mit dem Schließelement (27) verbunden ist.

9. Tragstruktur nach einem der vorhergehenden Ansprüche, **dadurch gekennzeichnet, dass** der Querträger (34) als Bogen (Mitteltunnel 35) ausgeführt ist und einen Abschnitt eines Mitteltunnels (35) der Tragstruktur (1) bildet.

10. Tragstruktur nach einem der vorhergehenden Ansprüche, **dadurch gekennzeichnet, dass** der Querträger (34) als Gussteil mit einem offenen Profil ausgeführt ist.

11. Tragstruktur nach einem der vorhergehenden Ansprüche, **dadurch gekennzeichnet, dass** das das Schließelement (27) als Form-Blechteil ausgeführt ist.

12. Tragstruktur nach einem der vorhergehenden Ansprüche, **dadurch gekennzeichnet, dass** der Schweller (4) endseitig an dem Quertragabschnitt (26) befestigt ist.

13. Tragstruktur nach einem der vorhergehenden Ansprüche, **dadurch gekennzeichnet, dass** der Schweller (4) an einer profilierten Profilwand (16) des Profils (13) befestigt wird.

14. Tragstruktur nach einem der vorhergehenden Ansprüche, **dadurch gekennzeichnet, dass** das Längstragelement (2) durchgehend als offenes Profil (13) ausgeführt ist.

## Claims

1. Support structure (1) for a motor vehicle, having a cast longitudinal support element (2) which is formed at least in sections as an open profile (13) and which also has, in each case at the end side, a first connecting section (6) for the fastening of a longitudinal beam (3) and a second connecting section (8) for the fastening of a sill (4) of the support structure (1), and having a closure element (27) which closes off the profile (13) of the longitudinal support element (2) at least in sections, **characterized in that** the second connecting section (8) is formed as an extension (22) of the open profile (13), **in that** the extension (22) together with the closure element (27) forms a transverse support section (26) which is aligned transversely with respect to the longitudinal extent (LE) of the longitudinal support element (2), and **in that** both the sill (4) and also a cross member (34) which runs in a direction away from the sill are fastened to the transverse support section (26).

2. Support structure according to Claim 1, **characterized in that** the hollow transverse support section (26) is formed **in that** the open profile (13) for the second connecting section (8) widens in a widening section (40), and **in that** the closure element (27) has, in addition to a cover (29), at least one upright closure wall (30, 31) which runs transversely with respect to the longitudinal extent (LE) of the profile (13).

3. Support structure according to Claim 1 or 2, **characterized in that** the closure element (27) connects two upright profile walls (15, 16) of the profile (13) to one another and extends with its closure wall (30, 31) up to a profile base (14) of the profile (13).

4. Support structure according to one of the preceding claims, **characterized in that** the closure element (27) is U-shaped in cross section and therefore has two closure walls (30, 31) which are connected to one another by means of the cover (29).

5. Support structure according to one of the preceding claims, **characterized in that** at least one transverse reinforcement web (32) is formed on the profile base (14) of the profile (13) in the second connecting section (8).

6. Support structure according to one of the preceding claims, **characterized in that** the transverse reinforcement web (32) extends into the profile walls (15, 16) of the profile (13) in the region of the second connecting section (8).

7. Support structure according to one of the preceding claims, **characterized in that** the cross member (34) is placed onto the transverse support section (26).

8. Support structure according to one of the preceding claims, **characterized in that** the cross member (34) on the transverse support section (26) is connected to the closure element (27).

9. Support structure according to one of the preceding claims, **characterized in that** the cross member (34) is formed as an arch (central tunnel 35) and forms a section of a central tunnel (35) of the support structure (1).

10. Support structure according to one of the preceding claims, **characterized in that** the cross member (34) is formed as a cast part with an open profile.

11. Support structure according to one of the preceding claims, **characterized in that** the closure element (27) is formed as a moulded sheet-metal part.

12. Support structure according to one of the preceding claims, **characterized in that** the sill (4) is fastened at the end side to the transverse support section (26).

13. Support structure according to one of the preceding claims, **characterized in that** the sill (4) is fastened to a profiled profile wall (16) of the profile (13).

14. Support structure according to one of the preceding claims, **characterized in that** the longitudinal support element (2) is formed as a continuously open profile (13).

## Revendications

1. Structure portante (1) pour un véhicule automobile, comprenant un élément porteur longitudinal coulé (2), qui est réalisé au moins en partie sous forme de profilé ouvert (13), et qui présente en outre à chaque fois du côté de son extrémité une première portion de connexion (6) pour la fixation d'un support longitudinal (3) et une deuxième portion de connexion (8) pour la fixation d'un bas de marche (4) de la structure portante (1), et comprenant un élément de fermeture (27) fermant au moins en partie le profilé (13) de l'élément porteur longitudinal (2), **caractérisée en ce que** la deuxième portion de connexion (8) est réalisée sous la forme d'une prolongation (22) du profilé ouvert (13), **en ce que** la prolongation (22) forme conjointement avec l'élément de fermeture (27) une portion portante transversale (26) qui est orientée transversalement à l'étendue longitudinale (LE) de l'élément porteur longitudinal (2), et **en ce que** le bas de marche (4) ainsi qu'un support transversal (34) s'étendant à l'écart du bas de marche sont fixés sur la portion portante transversale (26).

2. Structure portante selon la revendication 1, **caractérisée en ce que** la portion portante transversale (26) creuse est formé par le fait que le profilé ouvert (13) pour la deuxième portion de connexion (8) s'élargit dans une portion d'élargissement (40) et **en ce que** l'élément de fermeture (27) possède en plus d'un couvercle (29) au moins une paroi de fermeture (30, 31) dressée, s'étendant transversalement à l'étendue longitudinale (LE) du profilé (13).

3. Structure portante selon la revendication 1 ou 2, **caractérisée en ce que** l'élément de fermeture (27) relie l'une à l'autre deux parois de profilé dressées (15, 16) du profilé (13), et est guidé avec sa paroi de fermeture (30, 31) jusqu'à un fond de profilé (14) du profilé (13).

4. Structure portante selon l'une quelconque des revendications précédentes, **caractérisée en ce que** l'élément de fermeture (27) est réalisé en forme de U en section transversale et possède ainsi deux parois de fermeture (30, 31) qui sont connectées l'une à l'autre par le biais du couvercle (29).

5. Structure portante selon l'une quelconque des revendications précédentes, **caractérisée en ce qu'**au moins une nervure de renforcement transversale (32) est réalisée sur le fond de profilé (14) du profilé (13) dans la deuxième portion de connexion (8).

6. Structure portante selon l'une quelconque des revendications précédentes, **caractérisée en ce que** la nervure de renforcement transversale (32) s'étend jusque dans les parois de profilé (15, 16) du profilé (13) dans la région de la deuxième portion de connexion (8).

7. Structure portante selon l'une quelconque des revendications précédentes, **caractérisée en ce que** le support transversal (34) est posé sur la portion portante transversale (26).

8. Structure portante selon l'une quelconque des revendications précédentes, **caractérisée en ce que** le support transversal (34) est connecté à l'élément de fermeture (27) au niveau de la portion portante transversale (26).

9. Structure portante selon l'une quelconque des revendications précédentes, **caractérisée en ce que** le support transversal (34) est réalisé sous forme d'arc (tunnel central 35) et forme une portion d'un tunnel central (35) de la structure portante (1).

10. Structure portante selon l'une quelconque des revendications précédentes, **caractérisée en ce que** le support transversal (34) est réalisé sous forme de pièce coulée avec un profilé ouvert.

11. Structure portante selon l'une quelconque des revendications précédentes, **caractérisée en ce que** l'élément de fermeture (27) est réalisé sous forme de pièce moulée en tôle.

12. Structure portante selon l'une quelconque des revendications précédentes, **caractérisée en ce que** le bas de marche (4) est fixé du côté de son extrémité à la portion portante transversale (26).

13. Structure portante selon l'une quelconque des revendications précédentes, **caractérisée en ce que** le bas de marche (4) est fixé sur une paroi de profilé profilée (16) du profilé (13).

14. Structure portante selon l'une quelconque des revendications précédentes, **caractérisée en ce que** l'élément porteur longitudinal (2) est réalisé en continu sous forme de profilé ouvert (13).
